# EUROPÄISCHE PATENTANMELDUNG

(11) **EP 3 974 059 A1**
(43) Veröffentlichungstag der Anmeldung: **30.03.2022**
(21) Anmeldenummer: 20197992.9
(22) Anmeldetag: 24.09.2020
(51) Int. Cl.: B01J 23/42, B01J 29/74, B01J 35/00, B01J 37/00, B01J 35/02, C01B 21/02, C01B 21/20

(54) **VERFAHREN ZUR HERSTELLUNG EINES KATALYSATORS ZUR OXIDATION VON AMMONIAK**

(71) Anmelder: UMICORE AG & Co. KG, 63457 Hanau-Wolfgang (DE)
(72) Erfinder: EICH, Andreas, 63571 Gelnhausen (DE); SCHNEIDER, Wolfgang, 63517 Rodenbach (DE)

(57) **Zusammenfassung**

Die vorliegende Erfindung betrifft ein Verfahren zur Herstellung eines Katalysators zur Oxidation von Ammoniak, das durch folgende Verfahrensschritte gekennzeichnet ist:
• Mahlen von Platinschwarz, umfassend Primärpartikel einer Partikelgröße von 2 bis 7 nm, bis zu einer Größe der Agglomerate von 30 bis 150 nm und anschließendes Mischen mit einem Trägermaterial;
oder
Mischen von Platinschwarz, umfassend Primärpartikel einer Partikelgröße von 2 bis 7 nm mit einem Trägermaterial und Mahlen der Mischung bis zu einer Größe der Agglomerate des Platinschwarz von 30 bis 150 nm;
• Beschichten der Mischung auf ein Trägersubstrat;
• Trocknen des beschichteten Trägersubstrates und kalzinieren bei 120 bis 350 °C für 10 bis 15 Minuten; und
• Tempern des kalzinierten Trägersubstrates bei 500 bis 650 °C.

## Beschreibung

Die vorliegende Erfindung betrifft eine Verfahren zur Herstellung eines Katalysators zur Oxidation von Ammoniak, bei dem Platin in Form von Platinschwarz eingesetzt wird.

An die Reinigung der Abgase von Kraftfahrzeugen werden immer strengere Anforderungen gestellt. Während Partikel durch Filtration entfernt werden können, müssen unvollständig verbrannte Kohlenwasserstoffe (HC), Kohlenmonoxid (CO) und Stickoxide (NOₓ) zu Wasser, Kohlenstoffdioxid und Stickstoff umgesetzt werden. Dies erfolgt mit Hilfe katalytisch aktiver Feststoffe, die in der Regel als Beschichtung auf Trägersubstraten vorliegen. Bei mager betriebenen Motoren können HC und CO mit Hilfe von Oxidationskatalysatoren umgesetzt werden. Zur Reduktion von NOₓ zu Stickstoff ist entweder die Verwendung von NOₓ-Speicherkatalysatoren oder von SCR-Katalysatoren zur selektiver katalytischen Reduktion erforderlich. Während NOₓ-Speicherkatalysatoren periodisch regeneriert werden müssen, ist dies bei SCR-Katalysatoren nicht erforderlich.

Jedoch erfordert die Verwendung von SCR-Katalysatoren die Zudosierung von Reduktionsmittel. Gängige Praxis ist die Einspritzung einer wässrigen Lösung von Harnstoff in den Abgasstrang vor dem SCR-Katalysator. Bei Temperaturen oberhalb von 175°C bildet sich gemäß Reaktionsgleichung I durch Hydrolyse Ammoniak und CO₂:

(NH₂)₂CO + H₂O → 2NH₃ + CO₂ I

Das gebildete Ammoniak wiederum dient als Reduktionsmittel für die Reduktion der Stickoxide über den SCR-Katalysator zu Stickstoff, siehe Reaktionsgleichung II

x NH₃ + yNOx(+O₂) → ½(x+y)N₂ + 3x/2H₂O II

Besonders schnell läuft die Reaktion bei einem Verhältnis NO/NO₂ ≈ 1 ab, siehe Reaktionsgleichung III:

2NH₃ + NO + NO₂ → 2N₂ + 3H₂O III

Um einen möglichst vollständigen Umsatz der Stickoxide zu erreichen, wird der Harnstoff leicht überdosiert. Dies wiederum führt zu nicht umgesetztem Ammoniak im Abgas, was aufgrund seiner toxischen Wirkung unerwünscht ist und weshalb Ammoniakemissionen zunehmend in der Abgasgesetzgebung limitiert werden.

Aus diesem Grunde werden Oxidationskatalysatoren, nachfolgend als AMOX-Katalysator bezeichnet, verwendet, die über dem SCR-Katalysator nicht umgesetztes Ammoniak zu Stickstoff oxidieren, siehe Reaktionsgleichung IV

4NH₃ + 3O₂ → 2N₂ + 6H₂O IV

Die aktiven Katalysatorbestandteile eines AMOX-Katalysators sind in der Regel Edelmetallkatalysatoren, wobei im Vergleich zu Palladium- und Rhodiumkatalysatoren Platinkatalysatoren die höchste Ammoniakoxidationsaktivität zeigen, siehe Hansen T.K. (2017). Kgs. Lyngby: Technical Univ. of Denmark (DTU).

Als Trägermaterial für das Edelmetall wird für den AMOX-Katalysator in der Regel Aluminiumoxid (Al₂O₃) verwendet, da dieses eine ausgezeichnete thermische Stabilität aufweist. Allerdings weisen herkömmliche Al₂O₃-geträgerte AMOX-Katalysatoren eine unzureichende Selektivität für die Oxidation zu Stickstoff (N₂) auf und unerwünschte Nebenreaktionen führen zur Oxidation von Ammoniak zu NOₓ und N₂O. Diese Nebenreaktionen sind offensichtlich kontraproduktiv, zumal N₂O aufgrund seiner Wirkung als Treibhausgas problematisch ist.

Um die Selektivität zu erhöhen, ist es Stand der Technik, den AMOX-Katalysator mit einem SCR-Katalysator zu kombinieren und damit einen sogenannten Ammoniak-Schlupf-Katalysator (ASC) zu bilden, siehe zum Beispiel WO2016/205506A1, US2008/292519A1, US2014/212350A1, US2014/0157763A1 und US2015/037233A1). Dabei reduziert der SCR-Katalysator vom AMOX-Katalysator gebildetes Stickoxid, so dass der ASC-Katalysator insgesamt eine höhere Selektivität aufweist.

Im ASC-Katalysator können der AMOX- und der SCR-Katalysator gemischt in einer Schicht oder separat in getrennten Schichten vorliegen. Im letztgenannten Fall befindet sich der SCR-Katalysator in der Regel in einer Schicht über dem AMOX-Katalysator.

In der älteren Patentanmeldung EP19192428.1 sind vorteilhafte AMOX-Katalysatoren offenbart, die dadurch gekennzeichnet sind, dass Platin auf einem Trägeroxid geträgert ist und in Form von Platinpartikeln mit einem durchschnittlichen Partikeldurchmesser von 50 - 200 nm, bevorzugt 80 - 120 nm, vorliegt. Gemäß dieser älteren Anmeldung werden die Katalysatoren dadurch hergestellt, dass das Platin in ionischer Form aus einer Lösung auf dem Trägeroxid abgeschieden und anschließend nach Trocknung einer thermischen Behandlung bei 700°C bis 900°C unterzogen wird.

Platinschwarz ist ein feines Pulver aus elementarem Platin, in dem das Platin in Form von Primärpartikeln einer Größe von etwa 3 bis 7 nm vorliegt, die zu sekundären Gebilden einer Größe von etwa 100 bis 300 nm agglomeriert sind. Üblicherweise enthält Platinschwarz einen Anteil an Platindioxid, der beispielsweise bei 1 bis 3 Gew.-% liegt. Platinschwarz ist dem Fachmann bekannt und am Markt erhältlich.

Es wurde nun überraschenderweise gefunden, dass Platinschwarz in vorteilhafterweise zur Herstellung von Katalysatoren zur Oxidation von Ammoniak verwendet werden kann.

Die vorliegende Erfindung betrifft demnach ein Verfahren zur Herstellung eines Katalysators zur Oxidation von Ammoniak, das durch folgende Verfahrensschritte gekennzeichnet ist:
- Mahlen von Platinschwarz, umfassend Primärpartikel einer Partikelgröße von 2 bis 7 nm, bis zu einer Agglomeratgröße von 30 bis 150 nm und anschließendes Mischen mit einem Trägermaterial;
   oder
   Mischen von Platinschwarz, umfassend Primärpartikel einer Partikelgröße von 2 bis 7 nm mit einem Trägermaterial und Mahlen der Mischung bis zu einer Agglomeratgröße des Platinschwarz von 30 bis 150 nm;
- Beschichten der Mischung auf ein Trägersubstrat;
- Trocknen des beschichteten Trägersubstrates und kalzinieren bei 120 bis 350 °C für 10 bis 15 Minuten; und
- Tempern des kalzinierten Trägersubstrates bei 500 bis 650 °C.

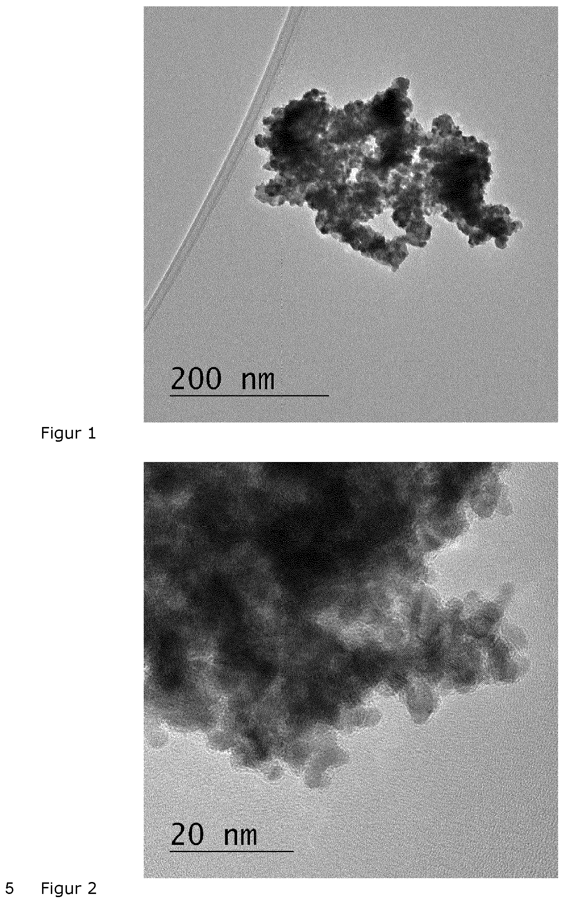

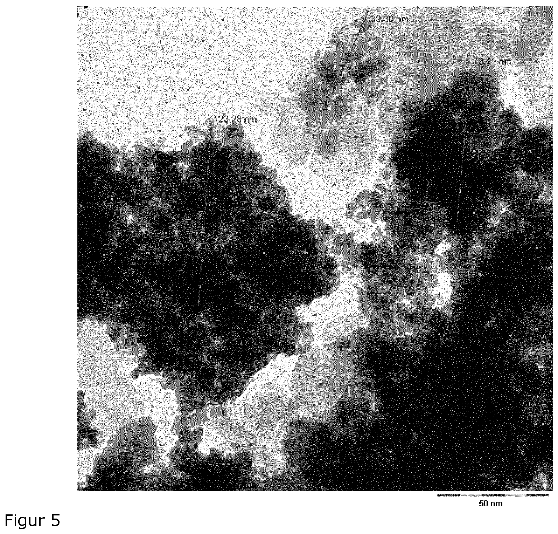

Gemäß vorliegender Anmeldung werden die Partikelgröße bzw. die Partikelgrößenverteilung der Sekundärpartikeldes Platins bzw. der Agglomerate der Primärpartikel durch statistische transmissionselektronenmikroskopische Analyse bestimmt. So zeigt Figur 1 eine TEM-Aufnahme eines agglomerierten Partikels von Platinschwarz. Figur 2 zeigt einen vergrößerten Ausschnitt von Figur 1, in der die Primärpartikel deutlich zu erkennen sind. Figur 5 zeigt auf Titandioxid geträgertes Platinschwarz nach gemeinsamer Mahlung gemäß zweiter Alternative des erfindungsgemäßen Verfahrens.

Wie bereits oben erwähnt, enthält Platinschwarz üblicherweise einen Anteil an Platindioxid, der beispielsweise bei 1 bis 3 Gew.-% liegt. Im Rahmen der vorliegenden Erfindung wurde gefunden, dass auch ein höherer Anteil an Platindioxid unschädlich ist.

Als Trägermaterialien können im erfindungsgemäßen Verfahren die üblicherweise bei der Herstellung von Edelmetallkatalysatoren verwendeten Materialien verwendet werden. Beispielsweise sind Metalloxide und Zeolithe geeignet. Die Auswahl des Trägermaterials ist allerdings weitgehend unkritisch und hat keinen oder nur geringen Einfluss auf die Eigenschaften des erfindungsgemäß hergestellten Katalysators.

Geeignete Metalloxide weisen insbesondere eine BET-Oberfläche von 30 bis 250 m²/g, bevorzugt von 100 bis 200 m²/g auf (bestimmt nach DIN 66132) und sind bevorzugt ausgewählt aus der Gruppe bestehend aus Aluminiumoxid, dotiertes Aluminiumoxid, Siliziumoxid, Magnesiumoxid, Titanoxid und einer Mischung oder eines Mischoxids oder Kompositoxids von mindestens zwei dieser Materialien.

Bevorzugt sind Aluminiumoxid, Magnesium/Aluminium-Mischoxide, Aluminium/Silizium-Mischoxide, Titandioxid und mit 1 bis 10 Gew.-% Siliziumdioxid dotiertes Titandioxid.

Als Trägermaterialien können auch Zeolithe verwendet werden, wobei beispielsweise Chabazit und β-Zeolith in Betracht kommen.

Bezogen auf das Trägermaterial wird beim erfindungsgemäßen Verfahren Platinschwarz insbesondere in Mengen von 0,2 bis 20 Gew.-%, bevorzugt 0,4 bis 1 Gew.-%, eingesetzt.

Beim erfindungsgemäßen Verfahren wird kein anderes Edelmetall außer Platin eingesetzt.

Das Mahlen von Platinschwarz in Abwesenheit des Trägermaterials gemäß der ersten Alternative des erfindungsgemäßen Verfahrens kann nach einem üblichen Verfahren in wässrigem Medium, zum Beispiel in einer Kugelmühle erfolgen. Bevorzugt erfolgt es aber in trockenem Zustand in rotierenden Behältnissen, zum Beispiel Probenflaschen, mit Mahlkugeln. In diesem Fall kann das gemahlene Platinschwarz in trockener Form zum Washcoat gemischt werden. Bevorzugt wird bis zu einer Größe der Agglomerate des Platinschwarz von 50 bis 100 nm gemahlen.

Das Mahlen der Mischung aus Platinschwarz und Trägermaterial erfolgt nach üblichen Mahlverfahren und in üblichen Mühlen, beispielsweise einer Kugelmühle, bis zu einer Größe der Agglomerate des Platinschwarz von 30 bis 150 nm, bevorzugt 50 bis 100 nm. Bevorzugt erfolgt der Mahlvorgang in wässrigem Medium, gegebenenfalls in Anwesenheit üblicher Hilfsmittel, wie insbesondere von Metalloxiden oder Metalloxidsolen. In diesem Fall kann die beim Mahlen erhaltene Suspension direkt, gegebenenfalls unter Zugabe üblicher Hilfsmittel als Washcoat für den folgenden Beschichtungsschritt verwendet werden.

Als Trägersubstrate können beim erfindungsgemäßen Verfahren Durchflusssubstrate, aber auch Wandflussfilter verwendet werden. Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an seinen beiden Enden offen sind.

Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

Die Beschichtung des Trägersubstrates mit dem Washcoat, zum Beispiel der aus der Mahlung resultierenden Mischung aus Platinschwarz und Trägermaterial kann nach dem Fachmann geläufigen Methoden hergestellt werden, so etwa nach den üblichen Tauchbeschichtungsverfahren bzw. Pump- und Saugbeschichtungsverfahren mittels eines Washcoats. Als Washcoat kann wie bereits oben erwähnt, die beim Mahlen erhaltene Suspension direkt, gegebenenfalls unter Zugabe üblicher Hilfsmittel, verwendet werden. Alternativ kann die gemahlene Mischung in bekannter Weise in einen Washcoat eingearbeitet werden.

Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer weiteren Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit der Mischung aus Platinschwarz und Trägermaterial beschichtet werden, vorzugsweise werden sie aber zunächst mit einem inerten Material, zum Beispiel Titandioxid, und erst dann mit dem katalytischen Material beschichtet.

In einer Ausführungsform des erfindungsgemäßen Verfahrens wird das Trägersubstrat über seine gesamte Länge beschichtet. In einer anderen Ausführungsform wird das Trägersubstrat aber nur 10% bis 80% seiner Gesamtlänge beschichtet. Der unbeschichtete Teil kann dann anschließend mit einer anderen katalytisch aktiven Beschichtung versehen werden, so dass ein zonierter Katalysator erhalten wird.

Erfindungsgemäß wird das beschichtete Trägersubstrate getrocknet und bei 120 bis 350 °C für 10 bis 15 Minuten kalziniert. Bevorzugt erfolgt die Kalzinierung bei 350 °C für 15 Minuten. Trocknung und Kalzinierung können nach dem Fachmann an sich bekannten Verfahren und geeigneten Öfen erfolgen.

Im gleichen Ofen wie die Kalzinierung kann auch das Tempern des kalzinierten Trägersubstrates bei 500 bis 650 °C, zum Beispiel für 0,5 bis 4 Stunden, bevorzugt bei 500 bis 650 °C für 1 bis 2 Stunden, erfolgen.

Das erfindungsgemäße Verfahren resultiert in einem Katalysator zur Oxidation von Ammoniak, der eine Beschichtung trägt, die das Trägermaterial und Platinpartikel mit einem durchschnittlichen Partikeldurchmesser von 30 bis 150 nm, bevorzugt 50 bis 100 nm, umfasst.

Das erfindungsgemäße Verfahren zeichnet sich gegenüber Verfahren, bei denen das Platin in ionischer Form aus einer Lösung auf dem Trägeroxid abgeschieden und anschließend nach Trocknung einer thermischen Behandlung bei 700°C bis 900°C unterzogen wird, durch deutliche Vorteile aus. So kann auf die thermischen Behandlung bei 700°C bis 900°C verzichtet werden und es genügt bereits ein Tempern des beschichteten Trägersubstrats bei wesentlich geringeren Temperaturen. Daneben kann auf teure wasserlösliche Platinverbindungen verzichtet werden und aufgrund der Unabhängigkeit der katalytischen Wirkung, zum Beispiel der Light-Off Temperatur für die Ammoniak-Oxidation, vom verwendeten Trägermaterial kann auf billigere Trägermaterialien, wie zum Beispiel Aluminiumoxid, zurückgegriffen werden. Außerdem können temperaturinstabilere Trägermaterialien verwendet werden und der Einsatz von Säuren und Basen zur pH-Werteinstellung beschränkt sich nur noch auf prozesstechnische Anforderungen des Washcoats, da keine gelösten Platinsalze mehr chemisch behandelt werden müssen.

Somit kann der erfindungsgemäß hergestellte Katalysator zur Oxidation von Ammoniak (AMOX), aber auch als Dieseloxidationskatalysator zur Oxidation von Kohlenwasserstoffen, Kohlenmonoxid und Stickstoffmonoxid verwendet werden.

Insbesondere betrifft die vorliegende Erfindung deshalb auch die Verwendung des erfindungsgemäß hergestellten Katalysators zur Oxidation von Ammoniak.

Bei einer Ausführungsform der erfindungsgemäßen Verwendung befindet sich auf dem Trägersubstrat eine weitere katalytisch aktive Zusammensetzung. Die weitere katalytisch aktive Zusammensetzung ist insbesondere ein SCR-Katalysator, so dass eine Ammoniak-Schlupf-Katalysator (ASC) vorliegt.

Dabei kann sich der SCR-Katalysator in der gleichen Schicht wie der AMOX-Katalysator befinden. Bevorzugt sind aber AMOX-Katalysator und SCR-Katalysator in unterschiedlichen Zonen und/oder Schichten angeordnet. Zonierte Katalysatoren können unterschiedlich ausgebildet sein. Beispielsweise kann sich eine Zone, beispielsweise eine den AMOX-Katalysator enthaltende Zone, von einem Ende (A) des Substrates her über die Länge L_{A} = 20% bis 80% der gesamten Substratlänge L erstrecken, während sich von dem anderen Ende (B) des Substrates eine weitere Zone, die einen SCR-Katalysator umfasst, über L_{B} = 20% bis 80% der Substratlänge L erstreckt. Dabei können sich die Zonen überlappen, sich berühren, oder mit Lücke ausgeführt sein. Bei Überlappung kann die Zone der Länge L_{b} sich über die Zone Lₐ erstrecken und somit die nachfolgende Reduktion von NOₓ zu N₂, wie zuvor beschrieben, übernehmen. In letzterem Fall kann L_{b} auch identisch mit der Länge des Substrates gewählt werden. Bei dem SCR-Katalysator kann es sich um einen Vanadiumoxid-basierten Katalysator oder einen Zeolith-basierten Katalysator des Typs Fe-Zeolith oder Cu-Zeolith handeln.

Zeolithe sind zwei- oder drei-dimensionale Strukturen, deren kleinste Substrukturen als SiO₄ und AlO₄-Tetraeder betrachtet werden können. Diese Tetraeder bilden größere Strukturen, wobei zwei jeweils über ein Sauerstoffatom miteinander verbunden sind. So können unterschiedlich große Ringstrukturen gebildet werden, wie z.B. Ringstrukturen aus 4, 6, oder sogar neun tetraedrisch koordinierte Si- oder Al-Atome. Die unterschiedlichen Zeolithtypen werden oft über die größte Ringgröße definiert, da diese Größe bestimmt, welche Gastmoleküle die Zeolithstruktur penetrieren können. Üblicherweise wird zwischen großporigen Zeolithen mit bis zu 12 Tetraedern Ringgröße, mittelgroßporigen Zeolithen mit bis zu 10 Tetraedern Ringgröße und kleinporigen Zeolithen mit bis zu 8 Tetraedern Ringgröße unterschieden. Die Zeolithe werden durch die ,Structural Commission of the International Zeolite Association' in Strukturtypen eingeteilt, welche durch Codes aus drei Buchstaben angegeben werden.

Für die erfindungsgemäße Verwendung können sowohl groß- als auch mittel- oder kleinporige Zeolithe verwendet werden. Beispiele geeigneter Zeolithe gehören den Strukturtypen ABW, AEI, AFX, BEA, CHA, DDR, ERI, ESV, FAU, FER, KFI, LEV, LTA, MER MFI, MWW, SOD oder STT an. Bevorzugt wird ein kleinporiger Zeolith des Strukturtyps AEI, AFX, CHA oder LEV. Besonders bevorzugt wird ein Zeolith des Strukturtyps CHA. Es wird ein Si : Al-Verhältnis von 2 bis 100, besonders bevorzugt von 5 : 50, und weiterhin bevorzugt von 10 : 40 verwendet.

Im Rahmen der vorliegenden Erfindung umfasst der Begriff 'Zeolith' auch Molekularsiebe, welche gelegentlich als ,Zeolith-ähnliche Strukturen' bezeichnet werden. Es werden bevorzugt Molekularsiebe der oben genannten Strukturtypen verwendet. Beispiele beinhalten Silizium-Aluminium-Phosphat-Zeolithe, welche auch als SAPO bezeichnet werden, und Aluminium-Phosphat-Zeolithe, welche als AIPO bekannt sind.

### Beispiel 1

a) Auf eine Größe von 30 bis 150 nm gemahlenes Platinschwarz in einer Menge, die nach der Beschichtung auf das Trägersubstrat 3 g/ft³ Trägersubstratvolumen entspricht und 410 g mit Siliziumoxid dotiertes Titandioxid wurden gemischt und unter Zugabe von 10 Gew.-% bezogen auf die Trockenmasse der Gesamtbeschichtung eines Binders auf Basis Aluminiumoxid in einen wässrigen Washcoat eingearbeitet.
b) Der in Schritt a) erhaltene Washcoat wurde in einer Menge von 25 g/l auf ein handelsübliches Durchflusssubstrat aus Cordierit beschichtet und getrocknet. Anschließend wurde 15 Minuten bei 350°C kalziniert und dann in einem Ofen 2 Stunden bei 500°C getempert.

Der erhaltene Katalysator umfasste Platinpartikel einer Partikelgröße von 50 bis 100 nm. Er wird nachfolgend K1 genannt.

### Beispiel 2

Beispiel 1 wurde wiederholt mit dem Unterschied, dass an Stelle des mit Siliziumoxid dotierten Titandioxids ein Zeolith vom Strukturtyp CHA eingesetzt wurde.

### Vergleichsbeispiel 1

Wie in Beispiel 1 werden 410 g mit Siliziumoxid dotiertes Titandioxid als Trägermaterial und Platin in einer Menge, die nach der Beschichtung auf das Trägersubstrat 3 g/ft³ Trägersubstratvolumen entspricht, verwendet. Im Unterschied zu Beispiel 1 wird aber das Platin nicht in Form von Platinschwarz eingesetzt, sondern aus wässriger Lösung von Tetraethylammoniumhexahydroxoplatinat durch Zugabe von verdünnter Salpetersäure auf das Trägermaterial gefällt. Anschließend wird der so hergestellte Washcoat in üblicher Weise mit 25 g/l auf ein handelsübliches Durchflusssubstrat beschichtet. Sodann wird das beschichtete Substrat bei 120°C getrocknet, für 15 Minuten bei 350 °C kalziniert und 2 Stunden bei 500 °C getempert. Der Katalysator wird nachfolgend VK1 genannt.

### Vergleich Beispiel 1 / Vergleichsbeispiel 1

Zur Vermessung wurden aus den fertigen Katalysatoren K1 und VK1 Bohrkerne mit einem Durchmesser von 25,4 mm und der Länge von 76,2 mm entnommen. Diese Bohrkerne wurden auf einer Modellgasanlage vermessen, wobei die Gaszusammensetzung und Raumgeschwindigkeit wie in Tabelle 1 angegeben gewählt wird.

**Tabelle 1**

| Parameter | Konzentration |
|---|---|
| GHSV [1/h] | 200000 |
| O₂ [Vol.-%] | 5 |
| H₂O [Vol.-%] | 5 |
| NH₃ [ppm] | 300 |
| N2 | Restmenge |

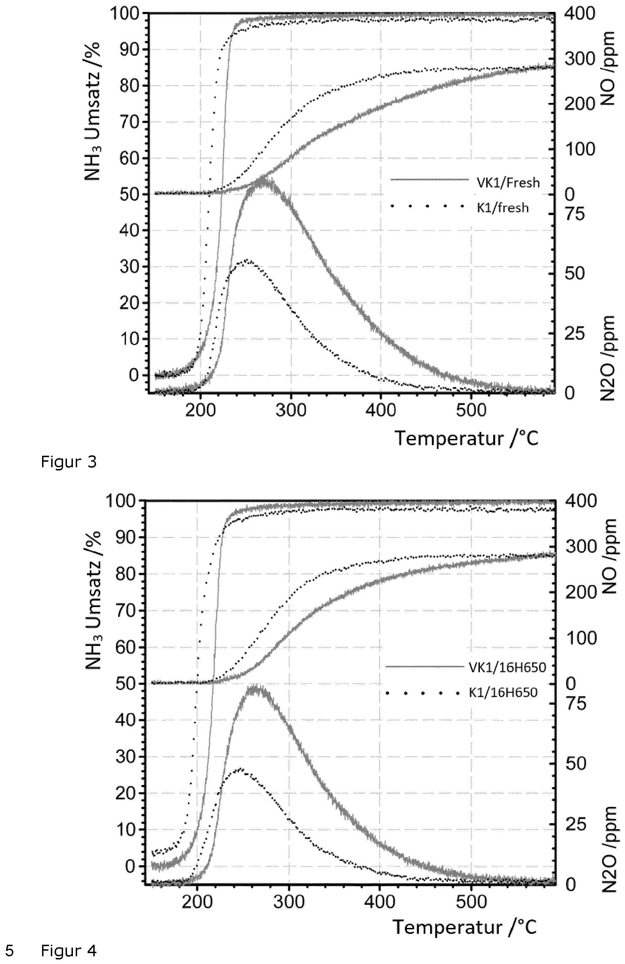

Die Ergebnisse sind vergleichend in den Figuren 3 und 4 dargestellt.

Figur 3 zeigt die Ammoniak-Umsatzkurve als Funktion der Temperatur für K1 (gepunktete Linie) und das Vergleichsbeispiel VK1 (durchgezogene Linie) in frischem Zustand. Wie zu erkennen ist, weist der erfindungsgemäße Katalysator einen signifikant früheren Light-Off auf. Während K1 eine Konvertierung von 50% bereits bei 209°C erreicht, gelingt dies unter Verwendung von VK1 erst bei 224°C.

Figur 3 zeigt darüber hinaus, dass K1 im Vergleich zu VK1 wesentlich weniger N₂O bildet. Die Tatsache, dass K1 mehr NO bildet als VK1 ist hinnehmbar, weil bei der bestimmungsgemäßen Verwendung von K1 in Kombination mit einem SCR-Katalysator in einem ASC-Katalysator NO im Gegensatz zu N₂O vom SCR-Katalysator umgesetzt wird.

Figur 4 zeigt die Ammoniak-Umsatzkurve als Funktion der Temperatur für K1 (gepunktete Linie) und das Vergleichsbeispiel VK1 (durchgezogene Linie) in gealtertem Zustand (Alterung 16 Stunden bei 650°C). Es zeigt sich das analoge Bild wie in Figur 3. K1 ist also generell aktiver als VK1 und hat eine deutlich geringere N₂O-Selektivität, dafür aber eine höhere NO-Selektivität.

## Patentansprüche

1. Verfahren zur Herstellung eines Katalysators zur Oxidation von Ammoniak, das durch folgende Verfahrensschritte gekennzeichnet ist:
• Mahlen von Platinschwarz, umfassend Primärpartikel einer Partikelgröße von 2 bis 7 nm, bis zu einer Größe der Agglomerate von 30 bis 150 nm und anschließendes Mischen mit einem Trägermaterial;
oder
Mischen von Platinschwarz, umfassend Primärpartikel einer Partikelgröße von 2 bis 7 nm mit einem Trägermaterial und Mahlen der Mischung bis zu einer Größe der Agglomerate des Platinschwarz von 30 bis 150 nm;
• Beschichten der Mischung auf ein Trägersubstrat;
• Trocknen des beschichteten Trägersubstrates und kalzinieren bei 120 bis 350 °C für 10 bis 15 Minuten; und
• Tempern des kalzinierten Trägersubstrates bei 500 bis 650 °C.

2. Verfahren gemäß Anspruch 1, **dadurch gekennzeichnet, dass** als Trägermaterial Aluminiumoxid, dotiertes Aluminiumoxid, Siliziumoxid, Magnesiumoxid, Titanoxid und eine Mischung oder eine Mischoxids oder ein Kompositoxid von mindestens zwei dieser Materialien oder ein Zeolith verwendet werden.

3. Verfahren gemäß Anspruch 1 und/oder 2, **dadurch gekennzeichnet, dass** Platinschwarz in Mengen von 0,2 bis 20 Gew.-%, bezogen auf das Trägermaterial, eingesetzt wird.

4. Verfahren gemäß einem oder mehreren der Ansprüche **Fehler! Verweisquelle konnte nicht gefunden werden.** bis 3, **dadurch gekennzeichnet, dass** das Mahlen bis zu einer Größe der Agglomerate des Platinschwarz von 50 bis 100 nm erfolgt.

5. Verfahren gemäß einem oder mehreren der Ansprüche **Fehler! Verweisquelle konnte nicht gefunden werden.** bis 4, **dadurch gekennzeichnet, dass** die Kalzinierung bei 350 °C für 15 Minuten erfolgt.

6. Verfahren gemäß einem oder mehreren der Ansprüche **Fehler! Verweisquelle konnte nicht gefunden werden.** bis 5, **dadurch gekennzeichnet, dass** das Tempern bei 500 bis 650 °C für 0,5 bis 4 Stunden, bevorzugt 1 bis 2 Stunden, erfolgt.

7. Verwendung eines gemäß einem oder mehreren der Ansprüche 1 bis 6 hergestellten Katalysators zur Oxidation von Ammoniak.

8. Verwendung gemäß Anspruch 7, **dadurch gekennzeichnet, dass** das Trägersubstrat einen SCR-Katalysator als weiteren Katalysator umfasst.

9. Verwendung gemäß Anspruch 8, **dadurch gekennzeichnet, dass** der SCR-Katalysator ein Vanadiumoxid-basierter Katalysator oder ein Zeolithbasierter Katalysator des Typs Fe-Zeolith oder Cu-Zeolith ist.

10. Verwendung gemäß Anspruch 8 und/oder 9, **dadurch gekennzeichnet, dass** der SCR-Katalysator Zeolith-basiert ist und der Zeolith dem Strukturtyp ABW, AEI, AFX, BEA, CHA, DDR, ERI, ESV, FAU, FER, KFI, LEV, LTA, MER MFI, MWW, SOD oder STT angehört.
